# EUROPÄISCHE PATENTSCHRIFT

(11) **EP 2 983 933 B1**
(45) Veröffentlichungstag und Bekanntmachung des Hinweises auf die Patenterteilung: **01.03.2017**
(21) Anmeldenummer: 14711796.4
(22) Anmeldetag: 24.03.2014
(51) Int. Cl.: B60K 6/365, B60K 6/48, B60K 6/445, F16H 3/72

(54) **HYBRIDANTRIEBSANORDNUNG FÜR EIN KRAFTFAHRZEUG**
HYBRID DRIVE ARRANGEMENT FOR A MOTOR VEHICLE
SYSTÈME DE PROPULSION HYBRIDE POUR VÉHICULE À MOTEUR

(30) Priorität: 08.04.2013 DE 102013006030
(43) Veröffentlichungstag der Anmeldung: 17.02.2016
(73) Patentinhaber: Volkswagen Aktiengesellschaft, 38440 Wolfsburg (DE)
(72) Erfinder: MEIßNER, Christian, 38126 Braunschweig (DE); SCHRÖDER, Hendrik, 38173 Stickte (DE)
(86) Internationale Anmeldenummer: PCT/EP2014/055846
(87) Internationale Veröffentlichungsnummer: WO 2014/166723

(56) Entgegenhaltungen:
- DE-A1-102006 060 402
- FR-A1- 2 838 679
- KR-A- 20110 062 140
- US-A1- 2007 105 678

## Beschreibung

### Gebiet der Erfindung

Die Erfindung bezieht sich auf eine Hybridantriebsanordnung für ein Kraftfahrzeug.

### Stand der Technik

Aus der DE 11 2007 000 041 B4 ist eine Hybridantriebsanordnung mit einer internen elektrischen Maschine, zwei Planetensätzen, davon einer als Doppelplanetensatz ausgebildet, drei Kupplungen und zwei Bremsen bekannt. Die bekannte Vorrichtung weist eine Eingangswelle auf, die im endmontierten Zustand im Kraftfahrzeug an eine Verbrennungskraftmaschine angeschlossen ist. Sie weist weiter eine Ausgangswelle auf, die im endmontierten Zustand im Kraftfahrzeug an einen Abtrieb angeschlossen ist, der typischerweise ein Differenzial sowie wenigstens eine angetriebene Achse umfasst. Ein hier als erster Planetensatz bezeichneter Planetensatz ist als Doppelplanetensatz ausgebildet. Ein hier als zweiter Planetensatz bezeichneter Planetensatz ist als einfacher Planetensatz ausgebildet. Beide Planetensätze umfassen in üblicher Weise eine Sonne, ein Hohlrad und einen Steg, auf dem ein Satz Planetenräder, welcher einerseits mit der Sonne und andererseits mit dem Hohlrad kämmt, drehbar montiert ist. Bei dem als Doppelplanetensatz ausgebildeten ersten Planetensatz umfasst der Satz Planetenräder zwei Teilsätze Planetenräder, die miteinander kämmen und von denen ein erster Teilsatz mit der Sonne und ein zweiter Teilsatz mit dem Hohlrad kämmt. Der Steg des ersten Planetensatzes ist einerseits mit dem Rotor der internen elektrischen Maschine verbunden und andererseits über eine erste Kupplung mit dem Hohlrad des zweiten Planetensatzes gekoppelt. Dieses ist zudem über eine zweite Kupplung mit der Eingangswelle gekoppelt. Die Eingangswelle ihrerseits ist über eine dritte Kupplung mit dem Hohlrad des ersten Planetensatzes gekoppelt, welches seinerseits mittels einer ersten Bremse mit dem Getriebegehäuse gekoppelt ist. Die Sonnen der beiden Planetensätze sind untereinander verbunden und gemeinsam mittels einer zweiten Bremse mit dem Getriebegehäuse gekoppelt. Der Steg des zweiten Planentensatzes ist mit der Abtriebswelle verbunden. Mit der bekannten Vorrichtung lassen sich zwei rein elektrische Fahrmodi, ein Modus zum Starten der Verbrennungskraftmaschine mittels der internen elektrischen Maschine und ein vier Vorwärtsgänge umfassender parallelhybrider Modus realisieren. Dies ist sinnvoll bei der Verwendung vergleichsweise kleiner elektrischer Maschinen. Durch neuere Entwicklungen werden die elektrischen Maschinen jedoch immer leistungsfähiger. Folglich nimmt die Bedeutung einer Vielzahl mechanischer Gänge immer weiter ab, während aus Komfortgründen der Bedarf nach einer stufenlosen Übersetzungsvariation steigt. Eine stufenlose Veränderung der Übersetzung ist mit der bekannten Vorrichtung nicht möglich.

Der Begriff "verbunden" wird hier im Sinne einer festen Verbindung benutzt. Im Gegensatz dazu umfasst der Begriff "gekoppelt" im Rahmen der vorliegenden Beschreibung sowohl feste als auch schaltbare Verbindungen. Ist konkret der letztere Fall gemeint, wird in der Regel das entsprechende Schaltelement, insbesondere eine Bremse oder eine Kupplung, explizit angegeben. Ist hingegen konkret der erstere Fall gemeint, wird in der Regel auf die Verwendung des Begriffs "gekoppelt" zu Gunsten des konkreteren Begriffs "verbunden" verzichtet. Die Verwendung des Begriffs "gekoppelt" ohne Angabe eines konkreten Schaltelementes deutet somit auf den beabsichtigten Einschluss beider Fälle hin. Diese Unterscheidung erfolgt allein zugunsten der besseren Verständlichkeit und insbesondere zur Verdeutlichung, wo das Vorsehen einer schaltbaren Verbindung anstelle einer in der Regel leichter realisierbaren festen Verbindung zwingend erforderlich ist. Die obige Definition des Begriffs "verbunden" ist daher keinesfalls so eng auszulegen, dass willkürlich zu Umgehungszwecken eingefügte Kupplungen aus seinem Wortsinn herausführten.

Die KR 10 2011 0062140 A offenbart einen Hybridantriebsanordnung mit den Merkmalen des Oberbegriffs von Anspruch 1.

### Aufgabenstellung

Es ist die Aufgabe der vorliegenden Erfindung die bekannte Hybridantriebsanordnung derart zu modifizieren, dass ohne Effizienzeinbußen ein stufenloser Betriebsmodus ermöglicht wird.

### Darlegung der Erfindung

Diese Aufgabe wird gelöst, durch eine Hybridantriebsanordnung für ein Kraftfahrzeug, umfassend
- eine an eine Verbrennungskraftmaschine anschließbare Eingangswelle und eine an einen Abtriebsstrang anschließbare Ausgangswelle ,
- eine interne elektrische Maschine , die einen Rotor und einen mit einem Getriebegehäuse fest verbundenen Stator aufweist und sowohl im motorischen als auch im generatorischen Betrieb betreibbar ist,
- einen ersten Planetensatz, dessen Sonne über eine erste Kupplung mit dem Rotor der internen elektrischen Maschine gekoppelt ist, dessen Steg über eine erste Bremse mit dem Getriebegehäuse gekoppelt ist und dessen Hohlrad mit der Ausgangswelle verbunden ist,
- einen zweiten Planetensatz, dessen Sonne mit dem Steg des ersten Planetensatzes verbunden ist, dessen Steg einerseits mit der Eingangswelle verbunden und andererseits über eine zweite Kupplung mit der Sonne des ersten Planetensatzes gekoppelt ist und dessen Hohlrad mit dem Rotor der internen elektrischen Maschine gekoppelt ist.

Wie auch bei der gattungsgemäßen Anordnung ist bevorzugt der erste Planetensatz als Doppelplanetensatz ausgebildet. Ansonsten müsste an anderer Stelle ein zusätzliches Drehrichtungsumkehrelement eingefügt werden.

Die Funktionsweise der vorliegenden Erfindung soll nachfolgend anhand einer bevorzugten Ausführungsform erläutert werden, bei der das Hohlrad des zweiten Planetensatzes über eine zweite Bremse mit dem Getriebegehäuse gekoppelt ist. Die Bedeutung dieser optionalen zweiten Bremse soll an geeigneter Stelle weiter unten erläutert werden. Daraus wird dann auch die Wirkung der grundlegenden Form der Erfindung ohne zweite Bremse deutlich werden. Mit der erfindungsgemäßen Hybridantriebsanordnung in ihrer bevorzugten Ausführungsform lassen sich ein Parksperrmodus, ein Startmodus für die Verbrennungskraftmaschine, ein parallelhybrider Modus mit vier mechanischen Gängen, ein mechanischer Direktgang und ein stufenloser Modus realisieren.

Im Parksperrenmodus sind die erste und die zweite Bremse geschlossen, die erste Kupplung geschlossen und die zweite Kupplung geöffnet. Von dem zweiten Planetensatz sind mittels der zweiten Bremse sein Hohlrad und mittels der ersten Bremse auch seine Sonne über den Steg des ersten Planetensatzes am Getriebegehäuse festgelegt. Damit ist der gesamte zweite Planetensatz und mit ihm die Eingangswelle, d.h. im endmontierten Zustand im Kraftfahrzeug die Verbrennungskraftmaschine, blockiert. Zudem ist über die zweite Bremse der bei dieser Ausführungsform mit dem Hohlrad des zweiten Planetensatzes fest verbundene Rotor der internen elektrischen Maschine blockiert. Diese Blockade setzt sich über die geschlossene erste Kupplung zur Sonne des ersten Planetensatzes fort, der somit ebenfalls zwei blockierte Elemente aufweist und daher insgesamt blockiert ist. Mit ihm ist der im Montageendzustand im Kraftfahrzeug am Hohlrad des ersten Planetensatzes angeschlossene Abtrieb des Kraftfahrzeugs blockiert.

Zum Starten der Verbrennungskraftmaschine werden, ausgehend vom Parksperrenmodus, die zweite Bremse und die erste Kupplung geöffnet. Im Startmodus ist somit lediglich die erste Bremse geschlossen, während die übrigen Schaltelemente geöffnet sind. Aufgrund der geöffneten ersten und zweiten Kupplung wird kein Drehmoment von der internen elektrischen Maschine - weder direkt noch indirekt über den Steg des zweiten Planetensatzes - an den Abtrieb übertragen. Stattdessen läuft das Moment der internen elektrischen Maschine über das Hohlrad des zweiten Planetensatzes und dessen Steg zu der im Montageendzustand an die Kurbelwelle der Verbrennungskraftmaschine angeschlossenen Eingangswelle. Der zweite Planetensatz wirkt dabei aufgrund seiner über den Steg des ersten Planetensatzes und die geschlossene erste Bremse festgehaltenen Sonne als reine Übersetzungsstufe.

Nach dem Start der Verbrennungskraftmaschine kann in den parallelhybriden Modus umgeschaltet werden und in einem ersten oder zweiten mechanischen Gang angefahren werden. Der erste mechanische Gang wird realisiert durch geschlossene erste Bremse und geschlossene zweite Kupplung und im Übrigen geöffnete Schaltelemente. Das Moment der Verbrennungskraftmaschine wird über den Steg des zweiten Planetensatzes eingeleitet. Dieser wirkt aufgrund seiner über den Steg des ersten Planetensatzes und die geschlossene erste Bremse festgelegten Sonne als reine Übersetzungsstufe. Das übersetzte Moment wird über die geschlossene zweite Kupplung zur Sonne des ersten Planetensatzes geleitet, der aufgrund seines mittels der ersten Bremse festgehaltenen Stegs ebenfalls als reine Übersetzungsstufe wirkt. Das erneut übersetzte Moment wird über das Hohlrad des ersten Planetensatzes an die Ausgangswelle und über diese an den Abtrieb geleitet. Zusätzlich kann Moment der internen elektrischen Maschine, deren Rotor mit dem Hohlrad des zweiten Planetensatzes verbunden ist, in diesen eingeleitet werden. Das Vorzeichen des eingeleiteten Momentes ist dabei ohne Belang. Insbesondere kann negatives Moment zur Energierekuperation genutzt werden. Eine weitere Nutzungsmöglichkeit im Hinblick auf einen leistungsverzweigten Betrieb soll weiter unten im Zusammenhang mit einer vorteilhaften Weiterbildung der Erfindung mit externer elektrischer Maschine beschrieben werden.

Ein zweiter mechanischer Gang im parallelhybriden Modus ist bei geschlossener erster Bremse und geschlossener erster Kupplung bei im Übrigen geöffneten Schaltelementen realisiert. Erneut wird das Moment der Verbrennungskraftmaschine über den zweiten Planetensatz, der aufgrund seiner widerum festgehaltenen Sonne als reine Übersetzungsstufe wirkt, eingeleitet. Die Weiterleitung erfolgt jedoch wegen der geöffneten zweiten Kupplung nicht über seinen Steg, sondern über sein Hohlrad. Hier kann auch zusätzliches Moment der internen elektrischen Maschine eingeleitet werden. Das kombinierte Moment fließt über die geschlossene erste Kupplung zur Sonne des aufgrund seines mittels der ersten Bremse festgehaltenen Steges als reine Übersetzungsstufe wirkenden Planetensatzes und von diesem über sein Hohlrad zur Ausgangswelle und zum Abtrieb.

Ein dritter mechanischer Gang im parallelhybriden Betrieb ist realisiert bei geschlossener erster und zweiter Kupplung und geöffneten Bremsen. Über die geschlossenen Kupplungen sind der Rotor der internen elektrischen Maschine und die Eingangswelle direkt miteinander gekoppelt und laufen mit gleicher Drehzahl um. Entsprechend haben auch der Steg und das Hohlrad des zweiten Planetensatzes die gleiche Drehzahl, sodass der zweite Planetensatz insgesamt als Block umläuft. Das kombinierte Moment von Verbrennungskraftmaschine und interner elektrischer Maschine wird über die Sonne des ersten Planetensatzes in diesen ein- und über sein Hohlrad zur Ausgangswelle und zum Abtrieb abgeleitet.

Der Fachmann erkennt an der obigen Beschreibung, dass die drei ersten mechanischen Gänge im parallelhybriden Modus, sowie der Startmodus ohne Einsatz der zweiten Bremse realisierbar sind. Bei der grundlegenden Ausführungsform der Erfindung ohne zweite Bremse, d.h. bei Ausführungsformen, bei denen das Hohlrad des zweiten Planetensatzes lediglich mit dem Rotor der internen elektrischen Maschine, nicht jedoch mit dem Getriebegehäuse gekoppelt ist, lassen sich die vorbeschriebenen Zustände ebenso realisieren wie bei der bevorzugten Ausführungsform mit zweiter Bremse, soweit sich diese im geöffneten Zustand befindet. Notwendig ist die zweite Bremse, die das Hohlrad des zweiten Planetensatzes mit dem Getriebegehäuse koppelt jedoch zur Realisierung der nachfolgend beschriebenen Betriebsmodi.

Ein vierter mechanischer Gang im parallelhybriden Modus ist realisiert bei geschlossener zweiter Bremse, geschlossener erster Kupplung und im Übrigen geöffneten Schaltelementen. Das über den Steg des aufgrund seines mittels der zweiten Bremse festgehaltenen Hohlrades als reine Übersetzungsstufe wirkenden zweiten Planetensatzes eingeleitete Moment der Verbrennungskraftmaschine wird über die Sonne des zweiten Planetensatzes zum Steg des ersten Planetensatzes geleitet. Dort kann es mit einem Moment der internen elektrischen Maschine kombiniert werden, welches über die geschlossene erste Kupplung zur Sonne des ersten Planetensatzes geleitet wird. Die Ableitung des kombinierten Momentes erfolgt über das mit der Ausgangswelle verbundene Hohlrad des ersten Planetensatzes.

Ein fünfter mechanischer Gang, der als Direktgang für hohe Fahrzeuggeschwindigkeiten konzipiert ist, ist realisiert bei geschlossener zweiter Bremse und geschlossener zweiter Kupplung und im Übrigen geöffneten Schaltelementen. In diesem Direktgang wird das Moment der Verbrennungskraftmaschine über die geschlossene zweite Kupplung direkt zur Sonne des ersten Planetensatzes geleitet. Die geschlossene zweite Bremse legt den Rotor der internen elektrischen Maschine sowie das Hohlrad des zweiten Planetensatzes am Getriebegehäuse fest. Der zweite Planetensatz wirkt daher als reine Übersetzungsstufe, wobei die Rotation der mit dieser Übersetzung angetriebenen Sonne des zweiten Planetensatzes über den Steg des ersten Planetensatzes wieder eingeleitet wird. Die Momentenableitung erfolgt wie in den zuvor geschilderten Fällen über das Hohlrad des ersten Planetensatzes an die Ausgangswelle und den angeschlossenen Abtrieb.

Schließlich lässt die erfindungsgemäße Hybridantriebsordnung noch einen stufenlosen Betriebsmodus zu, der unabhängig vom Vorhandensein der zweiten Bremse ist. Er ist realisiert bei geschlossener zweiter Kupplung und im Übrigen geöffneten Schaltelementen. Am günstigsten lässt sich der stufenlose Betriebsmodus, ausgehend von dem zuvor beschriebenen mechanischen Direktgang erläutern. Er unterscheidet sich von diesem lediglich dadurch, dass das Hohlrad des zweiten Planetensatzes nicht dauerhaft mittels der zweiten Bremse am Getriebegehäuse festgelegt ist, sondern von der internen elektrischen Maschine abgestützt wird. Erfolgt die Regelung der internen elektrischen Maschine so, dass ihr Rotor mittels elektromagnetischer Kräfte festgelegt wird, so ergibt sich die gleiche Übersetzung wie beim zuvor geschilderten Direktgang, wobei dies aufgrund der erforderlichen Bestromung der internen elektrischen Maschine weniger effizient ist. Erfolgt die Regelung der internen elektrischen Maschine jedoch so, dass ihr Rotor mit vorgegebener Drehzahl und / oder vorgegebenen Moment rotiert, ändert sich die Übersetzungswirkung des zweiten Planetensatzes entsprechend. In diesem Betriebsmodus lassen sich nahezu beliebige Übersetzungen innerhalb des Übersetzungsspektrums der Gesamtanordnung realisieren. Die zweite Bremse, mittels derer sich insbesondere die Übersetzungen des zuvor beschriebenen vierten und fünften Ganges, gegebenenfalls im parallelhybriden Modus, darstellen lassen, dient somit im Wesentlichen der Steigerung des Wirkungsgrades der erfindungsgemäßen Hybridantriebsanordnung, da dadurch ein elektromagnetisch erzeugtes Haltemoment energieeffizienter mittels einer mechanischen Bremse realisieren lässt.

Bevorzugt ist die zweite Bremse als formschlüssiges Schaltelement ausgebildet. Dies steigert den Wirkungsgrad der erfindungsgemäßen Anordnung erneut, da keine Verluste durch Schlupfreibung entstehen. Allerdings ist eine formschlüssige Ausgestaltung der zweiten Bremse bei Ausgestaltung der Erfindung gemäß einer der vorangehend beschriebenen Ausführungsformen nur dann möglich, wenn eine Schaltung lediglich bei stehendem Rotor der internen elektrischen Maschine erfolgt.

Dieses Problem wird reduziert, wenn wie bei einer bevorzugten Weiterbildung der Erfindung vorgesehen, dass Hohlrad des zweiten Planetensatzes über eine dritte Kupplung mit dem Rotor der internen elektrischen Maschine gekoppelt ist. Bei geschlossener dritter Kupplung ergibt sich kein Unterscheid zu den oben beschriebenen Ausführungsformen und Betriebsarten. Mit geöffneter dritter Kupplung ergeben sich jedoch fünf weitere Betriebsarten.

So lässt sich bei geschlossener erster Bremse, geschlossener erster Bremse, geschlossener erster Kupplung und im Übrigen geöffneten Schaltelementen ein rein elektrischer Modus realisieren. Durch die geöffnete zweite und dritte Kupplung ist die Verbrennungskraftmaschine vollständig vom Abtrieb abgekoppelt. Allein das Moment der elektrischen Maschine wird über die geschlossene erste Kupplung in den ersten Planetensatz eingeleitet, der aufgrund seines mittels der ersten Bremse festgehaltenen Steges als reine Übersetzungsstufe wirkt. Die Momenteneinleitung erfolgt dabei über die Sonne, die Momentenableitung über das Hohlrad des ersten Planentensatzes.

Ein alternativer Startmodus wird realisiert bei geschlossener erster und zweiter Kupplung und im Übrigen geöffneten Schaltelementen. Das Moment der elektrischen Maschine wird über die geschlossenen Kupplungen zur Eingangswelle und damit zur Kurbelwelle der Verbrennungskraftmaschine geleitet. An den Abtrieb wird dabei trotz der mitdrehenden Sonne des ersten Planetensatzes kein Moment geleitet, da im ersten Planetensatz keine Momentenabstützung stattfindet. Der mit der Sonne des zweiten Planetensatzes verbundene Steg läuft aufgrund der geöffneten ersten Bremse, der geöffneten zweiten Bremse
(falls vorhanden) und der Entkopplung vom Rotor der internen elektrischen Maschine mittels der geöffneten dritten Kupplung im Wesentlichen frei.

Ein alternativer ersten Gang im parallelhybriden Betriebsmodus ist realisiert bei geschlossener erster Bremse, geschlossener erster und zweiter Kupplung und im Übrigen geöffneten Schaltelementen. Das Moment der Verbrennungskraftmaschine wird über die geschlossene zweite Kupplung direkt zur Sonne des ersten Planetensatzes geleitet. Hier wird auch über die geschlossene erste Kupplung das Moment der internen elektrischen Maschine eingeleitet. Der erste Planetensatz wirkt aufgrund seines mittels der ersten Bremse festgehaltenen Steges als reine Übersetzungsstufe. Die gleichzeitig ebenfalls mittels der ersten Bremse festgehaltene Sonne des zweiten Planetensatzes macht auch diesen grundsätzlich zur reinen Übersetzungsstufe. Die resultierende Rotation des Hohlrades des zweiten Planetensatzes ist jedoch aufgrund der geöffneten zweiten Bremse (falls vorhanden) und der Entkopplung mittels der geöffneten dritten Kupplung im Wesentlichen wirkungslos.

Weiter erlaubt die dritte Kupplung einen Momentenbeitrag der internen elektrischen Maschine im oben bereits erläuterten fünften Gang. Dieser ist dann kein Direktgang mehr, sondern ein mechanischer Gang in parallelhybrider Betriebsart. Er ist realisiert bei geschlossener zweiter Bremse, geschlossener erster und zweiter Kupplung und im Übrigen geöffneten Schaltelementen. Mit anderen Worten wird dem mechanischen Direktgang über die nunmehr geschlossene erste Kupplung die interne elektrische Maschine zugeschaltet. Dies ist jedoch nur möglich, wenn deren Rotor von dem mittels der zweiter Bremse am Getriebegehäuse festgehaltenen Hohlrad des zweiten Planetensatzes entkoppelt ist. Diese Entkopplung erfolgt mittels der geöffneten dritten Kupplung.

Schließlich lässt sich ein alternativer stufenloser Betriebsmodus realisieren, wobei die zweite Bremse und die erste Kupplung geschlossen und die übrigen Schaltelemente geöffnet sind. Das Moment der Verbrennungskraftmaschine wird dabei über den Steg des aufgrund der geschlossenen zweiten Kupplung als reine Übersetzungsstufe wirkenden zweiten Planetensatzes ein- und über seine Sonne an den Steg des ersten Planentensatzes weitergeleitet. Das Moment der ersten elektrischen Maschine wird über die geschlossene erste Kupplung über die Sonne des ersten Planetensatzes dort eingeleitet, um dessen Übersetzung je nach Drehzahl ihres Rotors einzustellen.

Um die Möglichkeiten des rein elektrischen Fahrbetriebs zu erweitern, ist bei einer günstigen Weiterbildung der Erfindung vorgesehen, dass die Eingangswelle einen Freilauf aufweist, über den sie an dem Getriebegehäuse festlegbar ist. Dadurch lässt sich ein Drehmoment entgegen der Laufrichtung der Verbrennungskraftmaschine abstützen. Allerdings werden damit die Möglichkeiten zur Rekuperation mit der internen elektrischen Maschine eingeschränkt, was jedoch, wie weiter unten beschrieben, bei einer Weiterbildung der Erfindung mit externer elektrischer Maschine kompensiert werden kann.

Bei der Ausführungsform mit Freilauf wird ein zusätzlicher elektrischer Fahrbereich bei geschlossener zweiter Kupplung, geschlossener dritter Kupplung (falls vorhanden) und im Übrigen geöffneten Schaltelementen realisiert. Das Moment der elektrischen Maschine wird über das Hohlrad des zweiten Planetensatzes eingeleitet. Der Freilauf legt dessen Steg fest, sodass der zweite Planetensatz als reine Übersetzungsstufe wirkt. Über seine Sonne wird das Moment an den Steg des ersten Planetensatzes weitergeleitet, der ebenfalls als reine Übersetzungsstufe wirkt, weil nämlich seine Sonne über die geschlossene zweite Kupplung ebenfalls mittels des Freilaufs festgelegt ist.

Ein zweiter zusätzlicher rein elektrischer Fahrbereich ist bei geöffneter erster Kupplung, geschlossener dritter Kupplung (falls vorhanden) und im Übrigen geöffneten Schaltelementen realisiert. Das Moment der elektrischen Maschine wird über die geschlossene erste Kupplung direkt über die Sonne des ersten Planetensatzes eingeleitet. Das über das Hohlrad des zweiten Planetensatzes in diesen eingetragene Moment wird aufgrund des vom Freilauf abgestützten Steges einfach übersetzt und über die Sonne des zweiten Planetensatzes zum Steg des ersten Planetensatzes geleitet. Die resultierende Rotation wird über das Hohlrad des ersten Planetensatzes an den Abtrieb geleitet.

Mit der erfindungsgemäßen Hybridantriebsvorrichtung lassen sich rein elektrische, rein mechanische und parallelhybride Betriebsmodi realisieren. Um das Spektrum weiter zu vergrößern kann bei einer Weiterbildung der Erfindung wenigstens eine externe elektrische Maschine vorgesehen sein, die über eine Leistungselektronik mit der internen elektrischen Maschine sowie mit einem elektrischen Energiespeicher verbunden ist und die als lokales Antriebsaggregat mit wenigstens einem Antriebsrad des Kraftfahrzeugs gekoppelt ist. Hierdurch lassen sich zusätzlich seriellhybride und leistungsverzweigte Betriebsmodi realisieren. Auch können Funktionen der internen elektrischen Maschine, die aufgrund der speziellen Konstellation dauerhaft oder zeitweilig nicht zur Verfügung stehen von der externen elektrischen Maschine übernommen werden. Als Beispiel sei hier insbesondere die oben an mehreren Stellen angesprochene Möglichkeit der Rekuperation mittels der internen elektrischen Maschine genannt. Diese könnte von der externen elektrischen Maschine erfüllt werden.

Weitere Merkmale und Vorteile der Erfindung ergeben sich aus der nachfolgenden, speziellen Beschreibung und den Zeichnungen.

### Kurze Beschreibung der Zeichnungen

Es zeigen:
- Figur 1: eine einfache Ausführungsform der erfindungsgemäßen Hybridantriebsordnung
- Figur 2: eine bevorzugte Ausführungsform der erfindungsgemäßen Hybridantriebsordnung
- Figur 3: eine erweiterte Ausführungsform der erfindungsgemäßen Hybridantriebsanordnung.

Ausführliche Beschreibung bevorzugter Ausführungsformen

Gleiche Bezugszeichen in den Figuren deuten auf gleiche oder analoge Bauteile hin.

Die erfindungsgemäße Hybridantriebsanordnung, die hier vereinfachend auch als "Getriebe" angesprochen werden soll, ist in den Figuren isoliert dargestellt. Als Eingangselement dient die Eingangswelle 1 die im montierten Endzustand in einem Kraftfahrzeug drehmomentübertragend an die Kurbelwelle einer Verbrennungskraftmaschine angeschlossen ist. Als Ausgangselement dient die Ausgangswelle 2, im montieren Endzustand im Kraftfahrzeug an dessen Abtrieb angeschlossen ist der typischerweise ein Differenzial sowie wenigstens eine angetriebene Achse umfasst. Die nachfolgend beschriebenen Elemente sind von einem nicht im Detail dargestellten Getriebegehäuse umgeben, welches im endmontierten Zustand karossierest installiert ist.

Als seine wesentlichen Komponenten umfasst das erfindungsgemäße Getriebe eine interne elektrische Maschine 10 mit gehäusefestem Stator 11 und drehbarem Rotor 12, einen ersten Planetensatz 100 und einen zweiten Planetensatz 200 sowie eine Mehrzahl von Schaltelemente, insbesondere Kupplungen und Bremsen, deren konkrete Anordnung nachfolgend fallspezifisch beschrieben werden soll. Der erste Planetensatz 100 ist vorzugsweise, jedoch nicht zwingend, als Doppelplanetensatz ausgebildet. Er umfasst eine Sonne 110 einen Steg 120, auf dem ein in zwei Teilsätze aufgeteilter Satz von Planetenrädern 121 rotierbar gelagert ist, sowie ein Hohlrad 130. Die beiden Teilsätze des Planetenradsatzes 121 kämmen miteinander, wobei eine erster Teilsatz zusätzlich mit der Sonne 110 und ein zweiter Teilsatz mit dem Hohlrad 130 kämmt. Es ist dies der übliche Aufbau eines Doppelplanetensatzes. Der zweite Planetensatz 200 ist als einfacher Planetensatz ausgebildet und umfasst eine Sonne 210, eine Steg 220, auf dem ein Satz Planetenräder 221 drehbar gelagert ist, sowie ein Hohlrad 230. Die Planetenräder 221 kämmen einerseits mit der Sonne 210 und andererseits mit dem Hohlrad 230. Es ist dies der übliche Aufbau eines einfachen Planetensatzes. Diese Elemente sind von jeder der nachfolgend beschriebenen und weiteren Ausführungsformen der vorliegenden Erfindungen umfasst.

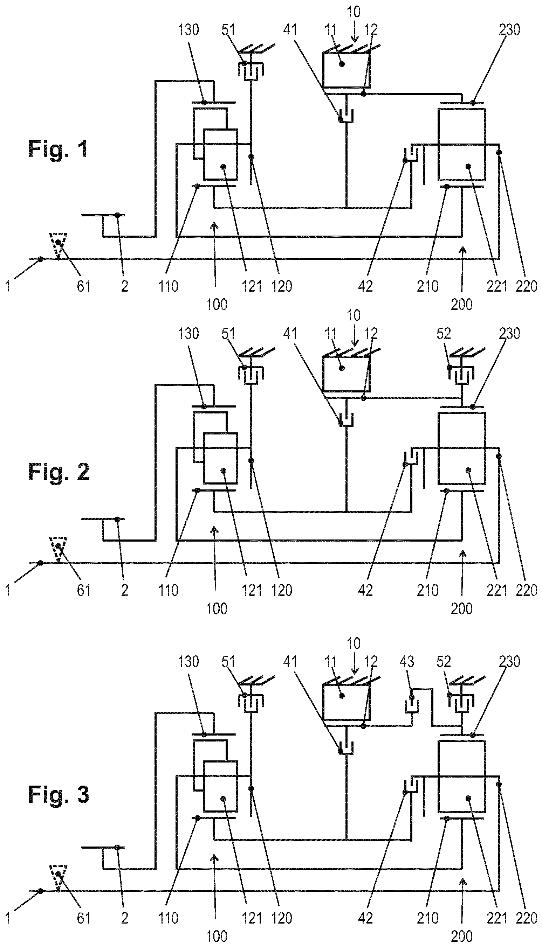

Figur 1 zeigt eine einfache Ausführungsform des erfindungsgemäßen Getriebes. Die Eingangswelle 1 ist mit dem Steg 220 des zweiten Planetensatzes 200 verbunden. Seine Sonne 210 ist mit dem Steg 120 des ersten Planetensatzes 100 verbunden. Sein Hohlrad 230 ist mit dem Rotor 12 der internen elektrischen Maschine 10 verbunden. Dieser ist zusätzlich über eine erste Kupplung 41 mit der Sonne 110 des ersten Planetensatzes schaltbar gekoppelt. Ebenfalls schaltbar mit der Sonne 110 des ersten Planetensatzes 100 gekoppelt ist der Steg 220 des zweiten Planetensatzes 200 und zwar über eine zweite Kupplung 42. Als weiteres Schaltelement ist eine erste Bremse 51 vorgesehen, mittels derer der Steg 120 des ersten Planetensatzes schaltbar am Getriebegehäuse festlegbar ist. Schließlich ist das Hohlrad 130 des ersten Planetensatzes 100 mit der Ausgangswelle 2 verbunden. Bezüglich der Funktionsweise, Wirkung und der mit der Anordnung von Figur 1 realisierbaren Betriebsmodi wird auf die Erläuterungen im obigen, allgemeinen Teil der Beschreibung verwiesen.

In Figur 1 zur Unterstreichung seiner Optionalität gestrichelt dargestellt ist ein Freilauf 61, über den die Eingangswelle an dem Getriebegehäuse abstützbar ist. Selbstverständlich ist der Freilauf so eingerichtet, dass er eine Rotation der Eingangswelle 1 in bestimmungsgemäßer Drehrichtung der Verbrennungskraftmaschine zulässt und eine Drehung in umgekehrter Richtung blockiert. Bezüglich der besonderen Vorteile und Wirkungen dieses optionalen Freilaufs wird auf die Erläuterung im obigen, allgemeinen Teil der Beschreibung verwiesen.

Die nachfolgend diskutierten Ausführungsformen der Figuren 2 und 3, die eine bevorzugte bzw. eine erweiterte Ausführungsform der Erfindung darstellen, sollen hier lediglich anhand der Unterschiede zur Ausführungsform von Figur 1 beschrieben werden. Bei der bevorzugten Ausführungsform gemäß Figur 2 ist die Anordnung gemäß Figur 1 um eine zweite Bremse 52 erweitert, mittels derer das Hohlrad 230 des zweiten Planetensatzes 200 schaltbar am Getriebegehäuse festlegbar ist. Im Übrigen kann auf die Beschreibung zu Figur 1 verwiesen werden. Hinsichtlich der besonderen Vorteile und Wirkung der zweiten Bremse 52 wird auf die Erläuterung im obigen, allgemeinen Teil der Beschreibung verwiesen.

Figur 3 zeigt eine erweiterte Ausführungsform der vorliegenden Erfindung, die sich von der Ausführungsform der Figur 2 durch eine zusätzliche, dritte Kupplung 43 unterscheidet, welche die in den Ausführungsformen der Figuren 1 und 2 feste Verbindung zwischen dem Rotor 12 der internen elektrischen Maschine 10 und dem Hohlrad 230 des zweiten Planetensatzes 200 aufbricht und durch eine schaltbare Kopplung ersetzt. Im Übrigen kann auf die Beschreibung zu den Ausführungsformen von Figur 1 und Figur 2 verwiesen werden. Hinsichtlich der besonderen Wirkungen und Vorteile der dritten Kupplung 43 wird auf die Beschreibung im obigen, allgemeinen Teil der Beschreibung verwiesen.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben. Insbesondere muss die konkrete geometrische Anordnung der Elemente des erfindungsgemäßen Getriebes nicht exakt der in den Figuren dargestellten Anordnungen entsprechen. Je nach den Erfordernissen des Einzelfalls, insbesondere den Bauraumgegebenheit des Einzelfalls lassen sich andere konstruktive Anordnungen der Elemente, die untereinander jedoch die erfindungsgemäßen Verbindungen und Schaltungen aufweisen, realisieren. Auch liegt es durchaus im Rahmen der vorliegenden Erfindung, die beschriebene Anordnung um eine oder mehrere externe elektrische Maschinen zu erweitern, die beispielsweise als Raddirektantriebe oder Achsdirektantriebe aufgebaut sind und über eine Leistungselektronik mit der internen elektrischen Maschine 10 sowie einem elektrischem Energiespeicher verbunden sind. Der Fachmann wird verstehen, dass dadurch zusätzliche elektrische und leistungsverzweigte Betriebsmodi ergeben können und / oder die vorhanden Betriebsmodi durch zusätzliche Funktionalitäten, wie beispielsweise Rekuperation mittels externer elektrischer Maschinen ergänzt werden können.

### Bezugszeichenliste

- 1: Eingangswelle
- 2: Ausgangswelle
- 10: interne elektrische Maschine
- 11: Stator von 10
- 12: Rotor von 10
- 41: erste Kupplung
- 42: zweite Kupplung
- 43: dritte Kupplung
- 51: erste Bremse
- 52: zweite Bremse
- 61: Freilauf
- 100: erster Planetensatz
- 110: Sonne von 100
- 120: Steg von 100
- 121: Planetenräder auf 120
- 130: Hohlrad von 100
- 200: zweiter Planetensatz
- 210: Sonne von 200
- 220: Steg von 200
- 221: Planetenräder auf 220
- 230: Hohlrad von 200

## Patentansprüche

1. Hybridantriebsanordnung für ein Kraftfahrzeug, umfassend
- eine an eine Verbrennungskraftmaschine anschließbare Eingangswelle (1) und eine an einen Abtriebsstrang anschließbare Ausgangswelle (2),
- eine interne elektrische Maschine (10), die einen Rotor (12) und einen mit einem Getriebegehäuse fest verbundenen Stator (11) aufweist und sowohl im motorischen als auch im generatorischen Betrieb betreibbar ist,
- einen ersten Planetensatz (100),
dessen Steg (120) über eine erste Bremse (51) mit dem Getriebegehäuse gekoppelt ist und dessen Hohlrad (130) mit der Ausgangswelle (2) verbunden ist,
- einen zweiten Planetensatz (200), dessen Sonne (210) mit dem Steg (120) des ersten Planetensatzes (100) verbunden ist, dessen Steg (220) einerseits mit der Eingangswelle (1) verbunden und andererseits über eine zweite Kupplung (42) mit einer Sonne (110) des ersten Planetensatzes (100) gekoppelt ist und dessen Hohlrad (230) mit dem Rotor (12) der internen elektrischen Maschine (10) gekoppelt ist, **dadurch gekennzeichnet, dass**
- die Sonne (110) des ersten Planetensatzes (100) über eine erste Kupplung (41) mit dem Rotor (12) der internen elektrischen Maschine (10) gekoppelt ist.

2. Hybridantriebsanordnung nach Anspruch 1,
**dadurch gekennzeichnet,**
**dass** der erste Planetensatz (100) als Doppelplanetensatz ausgebildet ist.

3. Hybridantriebsanordnung nach einem der vorangehenden Ansprüche,
**dadurch gekennzeichnet,**
**dass** das Hohlrad (230) des zweiten Planetensatzes (200) über eine zweite Bremse (52) mit dem Getriebegehäuse gekoppelt ist.

4. Hybridantriebsanordnung nach Anspruch 3,
**dadurch gekennzeichnet,**
**dass** die zweite Bremse (52) als formschlüssiges Schaltelement ausgebildet ist.

5. Hybridantriebsanordnung nach einem der vorangehenden Ansprüche,
**dadurch gekennzeichnet,**
**dass** das Hohlrad (230) des zweiten Planetensatzes (200) über eine dritte Kupplung (43) mit dem Rotor (12) der internen elektrischen Maschine (10) gekoppelt ist.

6. Hybridantriebsanordnung nach einem der vorangehenden Ansprüche,
**dadurch gekennzeichnet,**
**dass** die Eingangswelle (1) einen Freilauf (61) aufweist, über den sie an dem Getriebegehäuse abstützbar ist.

7. Hybridantriebsanordnung nach einem der vorangehenden Ansprüche,
**dadurch gekennzeichnet,**
**dass** wenigstens eine externe elektrische Maschine vorgesehen ist, die über eine Leistungselektronik mit der internen elektrischen Maschine (10) sowie mit einem elektrischen Energiespeicher verbunden ist und die als lokales Antriebsaggregat mit wenigstens einem Antriebsrad des Kraftfahrzeugs gekoppelt ist.

## Claims

1. Hybrid drive arrangement for a motor vehicle, comprising
- an input shaft (1) which can be connected to an internal combustion engine, and an output shaft (2) which can be connected to an output train,
- an internal electric machine (10) which has a rotor (12) and a stator (11) which is permanently connected to a transmission housing and can be operated both in the motor mode and in the generator mode,
- a first planetary gear set (100) whose web (120) is coupled to the transmission housing via a first brake (51), and whose ring gear (130) is connected to the output shaft (2),
- a second planetary gear set (200) whose sun gear (210) is connected to the web (120) of the first planetary gear set (100) and whose web (220) is connected on the one hand to the input shaft (1) and coupled on the other hand to a sun gear (110) of the first planetary gear set (100) via a second clutch (42), and whose ring gear (230) is coupled to the rotor (12) of the internal electric machine (10),
**characterized in that**
- the sun gear (110) of the first planetary gear set (100) is coupled to the rotor (12) of the internal electric machine (10) via a first clutch (41).

2. Hybrid drive arrangement according to Claim 1,
**characterized**
**in that** the first planetary gear set (100) is embodied as a double planetary gear set.

3. Hybrid drive arrangement according to one of the preceding claims,
**characterized**
**in that** the ring gear (230) of the second planetary gear set (200) is coupled to the transmission housing via a second brake (52).

4. Hybrid drive arrangement according to Claim 3,
**characterized**
**in that** the second brake (52) is embodied as a positively locking shift element.

5. Hybrid drive arrangement according to one of the preceding claims,
**characterized**
**in that** the ring gear (230) of the second planetary gear set (200) is coupled to the rotor (12) of the internal electric machine (10) via a third clutch (43).

6. Hybrid drive arrangement according to one of the preceding claims,
**characterized**
**in that** the input shaft (1) has a freewheel (61) via which it can be supported on the transmission housing.

7. Hybrid drive arrangement according to one of the preceding claims,
**characterized**
**in that** at least one external electric machine is provided which is connected via power electronics to the internal electric machine (10) and to an electrical energy store, and which is coupled as a local drive assembly to at least one drive wheel of the motor vehicle.

## Revendications

1. Système de propulsion hybride pour un véhicule à moteur, comprenant
- un arbre d'entrée (1) pouvant être relié à un moteur à combustion interne et un arbre de sortie (2) pouvant être relié à une chaîne cinématique,
- une machine électrique interne (10), qui présente un rotor (12) et un stator (11) solidairement assemblé à un carter de boîte de vitesses et qui peut fonctionner aussi bien en mode moteur qu'en mode générateur,
- un premier train planétaire (100), dont l'aile (120) est couplée au carter de boîte de vitesses par un premier frein (51) et dont la couronne dentée (130) est assemblée à l'arbre de sortie (2),
- un deuxième train planétaire (200), dont la roue solaire (210) est reliée à l'aile (120) du premier train planétaire (100), et dont l'aile (220) est d'une part reliée à l'arbre d'entrée (1) et est d'autre part couplée par un deuxième embrayage (42) à une roue solaire (110) du premier train planétaire (100) et dont la couronne dentée (230) est couplée au rotor (12) de la machine électrique interne (10), **caractérisé en ce que**
- la roue solaire (110) du premier train planétaire (100) est couplée par un premier embrayage (41) au rotor (12) de la machine électrique interne (10).

2. Système de propulsion hybride selon la revendication 1, **caractérisé en ce que** le premier train planétaire (100) est constitué par un double train planétaire.

3. Système de propulsion hybride selon l'une quelconque des revendications précédentes, **caractérisé en ce que** la couronne dentée (230) du deuxième train planétaire (200) est couplée au carter de boîte de vitesses par un deuxième frein (52).

4. Système de propulsion hybride selon la revendication 3, **caractérisé en ce que** le deuxième frein (52) est réalisé sous forme d'élément de commutation à emboîtement.

5. Système de propulsion hybride selon l'une quelconque des revendications précédentes, **caractérisé en ce que** la couronne dentée (230) du deuxième train planétaire (200) est couplée par un troisième embrayage (43) au rotor (12) de la machine électrique interne (10).

6. Système de propulsion hybride selon l'une quelconque des revendications précédentes, **caractérisé en ce que** l'arbre d'entrée (1) présente une roue libre (61), par laquelle il peut s'appuyer sur le carter de boîte de vitesses.

7. Système de propulsion hybride selon l'une quelconque des revendications précédentes, **caractérisé en ce qu'**il est prévu au moins une machine électrique externe, qui est reliée par une électronique de puissance à la machine électrique interne (10) ainsi qu'à un accumulateur d'énergie électrique et qui est couplée comme groupe de propulsion local à au moins une roue motrice du véhicule à moteur.
